# EUROPEAN PATENT SPECIFICATION

(11) **EP 1 890 358 B1**
(45) Date of publication and mention of the grant of the patent: **08.12.2010**
(21) Application number: 07121403.5
(22) Date of filing: 04.05.2006
(51) Int. Cl.: H01M 10/48, H01M 2/10

(54) **Battery charge indicator**
Batterieladungsanzeiger
Indicateur de charge de batterie

(30) Priority: 05.05.2005 US 677924
(43) Date of publication of application: 20.02.2008
(62) Divisional of application: 06113530.7
(73) Proprietor: Black & Decker, Inc., Newark, DE 19711 (US)
(72) Inventor: Ayala, Adan, Baltimore, MD 21212 (US); Proakis, Michael J, Balitmore, MD 21206 (US); Morris, Peter E, Baltimore, MD 21212 (US); Bradus, Robert, Bel Air, MD 21015 (US)
(74) Representative: Bell, Ian Stephen

(56) References cited:
- EP-A1- 0 707 350
- EP-A1- 0 991 131
- GB-A- 2 266 003
- US-A- 5 391 972

## Description

This application derives priority from US Application No. 60/677,924, filed May 5, 2005.

This invention relates generally to power tool battery packs and more particularly to power tool battery packs with charge indicators.

The battery packs for portable power tools, outdoor tools and certain kitchen and domestic appliances may include rechargeable batteries, such as lithium, nickel cadmium, nickel metal hydride and lead-acid batteries, so that they can be recharged rather than be replaced. Thereby a substantial cost saving is achieved.

It is known to provide power tool battery packs with displays to show the state-of-charge of such battery packs. It is desired to provide an inexpensive mechanism to alert the user whether a power tool battery pack is charged or discharged.

An improved power tool system is employed. The system includes a cordless device having device terminals, a battery pack detachably engageable to the power tool, the battery pack comprising a housing, at least one cell disposed within the housing, pack terminals connectable to the device terminals, a movable member disposed within the housing, the member being movable between first and second positions to indicate a condition of the battery pack, one of the housing and the member having a detent engaging a detent notch disposed on the other of the housing and member for maintaining the member in at least one of the first and second positions, and a charger electrically connectable to the battery pack for charging the battery pack, wherein at least one of the cordless device and the charger have a protrusion for moving the member between positions.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a diagram of a system according to the invention; and
FIG. 2 is a partial cross-sectional view of a charge indicator according to the invention.

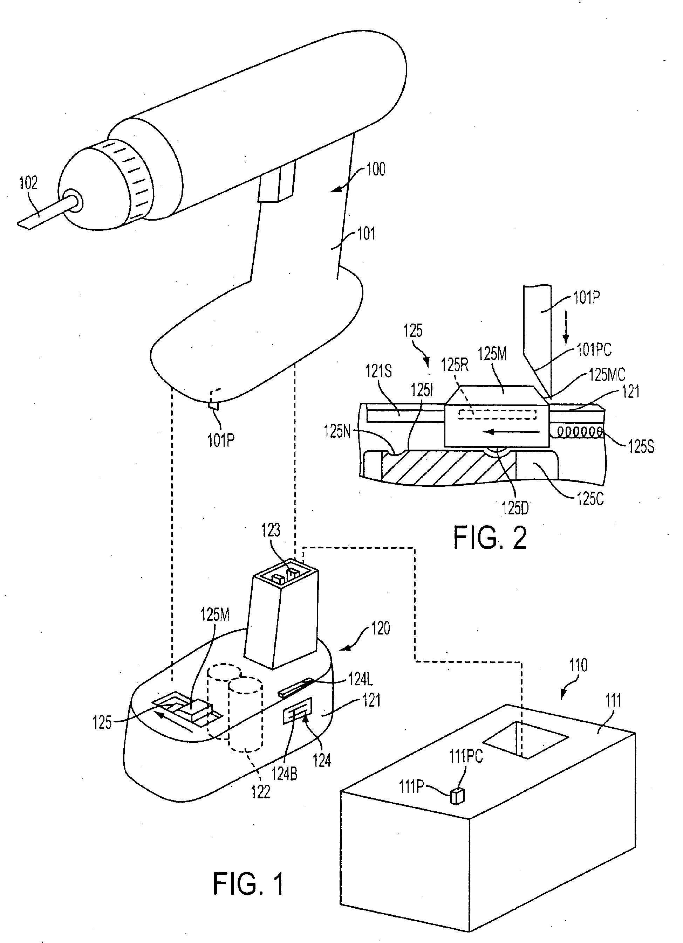

A system according to the invention is shown in FIG. 1. In such figure, the system preferably includes a cordless device 100, such as a drill or other power tool, a power tool battery pack 120 electrically connectable to cordless device 100 for powering cordless device 100, and a charger 110 electrically connectable to power tool battery pack 120 for charging the power tool battery pack 120.

Cordless device 100 may have a housing 101, and a motor (not shown) disposed in device housing 101 for driving a tool 102 or performing any other action.

Cordless device 100 is electrically connectable to a power tool battery pack 120. Battery pack 120 may have a pack housing 121 and at least one cell 122 disposed within the housing 121. Cell 122 may have a chemistry of lithium, nickel cadmium, nickel metal hydride and/or lead-acid. Persons skilled in the art will recognize that such power tool battery pack 120 may be built according to the teachings of US Patent Nos. 6,057,608 and 5,144,217, which are hereby incorporated by reference.

Battery pack 120 may also have pack terminals 123 that are connectable to terminals (not shown) of the cordless device.

At least one of battery pack 120 and cordless device 100 will have a latching mechanism 124 for temporarily engaging the other of battery pack 120 and cordless device 100, thus securely holding the battery pack 120 and cordless device 100 together. Referring to FIG. 1, latching mechanism 124 may include a latch 124L that engages device housing 101, and a button 124B which can be pushed by the user to move latch 124L to an unlatched position, thus releasing the battery pack 120 from cordless device 100.

Such latching mechanisms are well known in the art. Nonetheless, persons skilled in the art are referred to US Patent Nos. 6,656,626, 6,057,608, 6,007,939 and 5,144,217 and US Patent Publication Nos. US 20040242043 and US 20040242042 for further information. GB 2266003 discloses a battery status indicator comprising a slide indicator moveable between a first and second position.

Battery pack 120 may be electrically connectable to a charger 110 for charging battery pack 120. Charger 110 may include a housing 111 for supporting the charger electronics (not shown) and/or battery pack 120 when battery pack 120 is connected to charger 110.

Referring to FIGS. 1-2, battery pack 120 preferably has an indicator assembly 125 for indicating the state-of-charge of battery pack 120. Indicator assembly 125 may have a movable member 125M which is slidably or pivotably attached to pack housing 121. Preferably, member 125M has at least one protrusion 125R that slides along a slot 121S in pack housing 121.

Member 125M preferably has a detent 125D that engages a detent notch 125N disposed on pack housing 121. Persons skilled in the art will recognize that pack housing 121 may alternatively carry the detent 125D, while the member 125M may have the detent notch 125N that engages detent 125D.

Member 125M may have at least one inclined surface 125MC. Surface 125MC may engage an inclined surface 101 PC on a protrusion 101 P of cordless device 100 to move member 125M along a first direction when battery pack 110 is connected to the cordless device.

Similarly, charger housing 111 may have a protrusion 111 P that may also have an inclined surface 111 PC. When surfaces 111 PC, 125MC engage, i.e., when battery pack 120 is disposed on charger 110 and electrically connected, member 125M will move along a second direction.

Pack housing 121 may have indicia 125I disposed underneath member 125M to indicate the state-of-charge of battery pack 120. Accordingly, when member 125M is moved by protrusion 101 P to a first position, indicia 125I may indicate that the battery pack 120 has been discharged (or that at least it is not fully charged). Similarly, when member 125M is moved by protrusion 111P to a second position, indicia 125I may indicate that battery pack 120 has been charged (or at least that it has been disposed on a charger 110).

Persons skilled in the art will recognize that it is preferable pack housing 121 has two detent notches 125N for selectively maintaining the member 125M in the first and second positions described above. Preferably, surfaces 101 PC, 125MC move the member 125M until detent 125D has disengaged the first detent notch 125N. A spring 125S disposed between member 125M and pack housing 121 may then move member 125M to the first position. Persons skilled in the art will recognize that spring 125S may be disposed to move member 125 to the second position.

Furthermore, persons skilled in the art will recognize that surfaces 101 PC, 125MC may move the member 125M until detent 125D has disengaged the first detent notch 125N and engaged the second detent notch 125N.

Preferably, pack housing 121 may create a channel 125C to allow protrusion(s) 101 P and/or 111 P to move past member 125M into pack housing 121.

Member 125M is preferably movable by the user. Accordingly, it is desirable to design the detent 125D and detent notch(es) 125N so that the user (or protrusion(s) 101 P and/or 111 P) can easily move member 125M while maintaining member 125M in the selected position even if other forces, such as vibration, are applied to member 125M.

Persons skilled in the art will recognize that while indicator assembly 125 is not necessarily an accurate indicator of the state-of-charge of battery pack 120, it is convenient and less expensive than typical electronic state-of-charge indicators.

Persons skilled in the art may recognize other alternatives to the means disclosed herein.

## Claims

1. A system comprising:
a cordless device having device terminals;
a battery pack detachably engageable to the cordless device, the battery pack comprising a housing, at least one cell disposed within the housing, pack terminals connectable to the device terminals, a movable member disposed within the housing, the member being movable between first and second positions to indicate a condition of the battery pack; and
a charger electrically connectable to the battery pack for charging the battery pack;
wherein at least one of the cordless device and the charger have a first protrusion for moving the member between positions;
**characterised in that** the battery pack further comprises a spring disposed between the housing and the member.

2. The system of Claim 1, wherein one of the housing and the member has a detent engaging a detent notch disposed on the other of the housing and member for maintaining the member in at least one of the first and second positions.

3. The system of Claim 1, wherein the cordless device is a power tool.

4. The system of Claim 1, wherein the cordless device is a drill.

5. The system of Claim 1, wherein the first protrusion is disposed on the cordless device for moving the member from the first position to the second position.

6. The system of Claim 5, wherein a second protrusion is disposed on the charger for moving the member from the second position to the first position.

7. The system of Claim 5, wherein the first position indicates that the battery pack is charged and second position indicates that the battery pack has been used.

8. The system of Claim 1, wherein the first protrusion is disposed on the charger for moving the member from the second position to the first position.

9. The system of Claim 8, wherein a second protrusion is disposed on the cordless device for moving the member from the first position to the second position.

10. The system of Claim 8, wherein the first position indicates that the battery pack is charged and second position indicates that the battery pack has been used.

11. The system of Claim 1, wherein the at least one cell has a chemistry of at least one of the group consisting of lithium-ion, nickel cadmium, nickel metal hydride and lead-acid.

12. A battery pack comprising:
a housing;
at least one cell disposed within the housing;
pack terminals connectable to the device terminals; and
a movable member disposed within the housing, the member being movable between first and second positions to indicate a condition of the battery pack;
**characterised in that** the battery pack further comprises a spring disposed between the housing and the movable member.

## Patentansprüche

1. System, umfassend:
eine kabellose Vorrichtung, die Vorrichtungsanschlussklemmen hat;
einen Batteriesatz, der abnehmbar mit der kabellosen Vorrichtung verbunden werden kann, wobei der Batteriesatz ein Gehäuse, mindestens eine Zelle, die im Gehäuse angeordnet ist, Packanschlussklemmen, die mit den Vorrichtungsanschlussklemmen verbunden werden können, ein bewegliches Teil, das im Gehäuse angeordnet ist, umfasst, wobei das Teil zwischen einer ersten und einer zweiten Position beweglich ist, um einen Zustand des Batteriesatzes anzuzeigen; und
ein Ladegerät, das elektrisch mit dem Batteriesatz zum Laden des Batteriesatzes verbunden werden kann;
wobei mindestens ein Element aus der kabellosen Vorrichtung und dem Ladegerät einen ersten Vorsprung zum Bewegen des Teils zwischen den Positionen hat;
**dadurch gekennzeichnet, dass** der Batteriesatz ferner eine Feder umfasst, die zwischen dem Gehäuse und dem Teil angeordnet ist.

2. System nach Anspruch 1, wobei ein Element aus dem Gehäuse und dem Teil einen Sperrhaken hat, der in eine Sperrhakenkerbe eingreift, welche im anderen Element aus dem Gehäuse und dem Teil angeordnet ist, um das Teil in mindestens einer aus der ersten und zweiten Position zu halten.

3. System nach Anspruch 1, wobei die kabellose Vorrichtung ein elektrisch betriebenes Werkzeug ist.

4. System nach Anspruch 1, wobei die kabellose Vorrichtung eine Bohrmaschine ist.

5. System nach Anspruch 1, wobei der erste Vorsprung auf der kabellosen Vorrichtung zum Bewegen des Teils aus der ersten in die zweite Position angeordnet ist.

6. System nach Anspruch 5, wobei ein zweiter Vorsprung auf dem Ladegerät zum Bewegen des Teils aus der zweiten in die erste Position angeordnet ist.

7. System nach Anspruch 5, wobei die erste Position anzeigt, dass der Batteriesatz geladen ist, und die zweite Position anzeigt, dass der Batteriesatz verwendet worden ist.

8. System nach Anspruch 1, wobei der erste Vorsprung auf dem Ladegerät zum Bewegen des Teils aus der zweiten in die erste Position angeordnet ist.

9. System nach Anspruch 8, wobei ein zweiter Vorsprung auf der kabellosen Vorrichtung zum Bewegen des Teils aus der ersten in die zweite Position angeordnet ist.

10. System nach Anspruch 8, wobei die erste Position anzeigt, dass der Batteriesatz geladen ist und die zweite Position anzeigt, dass der Batteriesatz verwendet worden ist.

11. System nach Anspruch 1, wobei die mindestens eine Zelle chemische Prozesse von mindestens einem Element aus der Gruppe bestehend aus Lithium-Ion, Nickel-Kadmium, Nickel-Metallhydrid und Blei-Säure aufweist.

12. Batteriesatz, umfassend:
ein Gehäuse;
mindestens eine Zelle, die im Gehäuse angeordnet ist;
Anschlussklemmen des Batteriesatzes, die mit den Vorrichtungsanschlussklemmen verbunden werden können; und
ein bewegliches Teil, das im Gehäuse angeordnet ist, wobei das Teil zwischen einer ersten und zweiten Position bewegt werden kann, um einen Zustand des Batteriesatzes anzuzeigen;
**dadurch gekennzeichnet, dass** der Batteriesatz ferner eine Feder umfasst, die zwischen dem Gehäuse und dem beweglichen Teil angeordnet ist.

## Revendications

1. Système comprenant :
un dispositif sans fil ayant des terminaux de dispositif ;
un bloc de piles pouvant s'engager de manière amovible sur le dispositif sans fil, le bloc de piles comprenant un boîtier, au moins une pile disposée à l'intérieur du boîtier, des terminaux de bloc pouvant être raccordés aux terminaux du dispositif, un élément mobile disposé à l'intérieur du boîtier, l'élément mobile entre une première et une seconde position pour indiquer un état du bloc de piles ; et
un chargeur pouvant être électriquement connecté au bloc de piles pour charger le bloc de piles ;
dans lequel au moins un élément parmi le dispositif sans fil et le chargeur a une première saillie pour déplacer l'élément entre des positions ;
**caractérisé en ce que** le bloc de piles comprend en outre un ressort disposé entre le boîtier et l'élément.

2. Système selon la revendication 1, dans lequel le boîtier ou l'élément a un arrêt s'engageant sur une encoche d'arrêt disposée sur l'autre du boîtier et de l'élément afin de maintenir l'élément dans au moins une première et une seconde position.

3. Système selon la revendication 1, dans lequel le dispositif sans fil est un outil électrique.

4. Système selon la revendication 1, dans lequel le dispositif sans fil est un foret.

5. Système selon la revendication 1, dans lequel la première saillie est disposée sur le dispositif sans fil pour déplacer l'élément de la première position à la seconde position.

6. Système selon la revendication 5, dans lequel une seconde saillie est disposée sur le chargeur pour déplacer l'élément de la seconde position à la première position.

7. Système selon la revendication 5, dans lequel la première position indique que le bloc de piles est chargé et la seconde position indique que le bloc de piles a été utilisé.

8. Système selon la revendication 1, dans lequel la première saillie est disposée sur le chargeur pour déplacer l'élément de la seconde position à la première position.

9. Système selon la revendication 8, dans lequel une seconde saillie est disposée sur le dispositif sans fil pour déplacer l'élément de la première position à la seconde position.

10. Système selon la revendication 8, dans lequel la première position indique que le bloc de piles est chargé et la seconde position indique que le bloc de piles a été utilisé.

11. Système selon la revendication 1, dans lequel la au moins une pile a une structure chimique composée d'au moins un des composés du groupe suivant : ion lithium, nickel-cadmium, hydrure de nickel métallique et plomb-acide.

12. Bloc de piles comprenant :
un boîtier ;
au moins une pile disposée à l'intérieur du boîtier ;
des terminaux de bloc pouvant être raccordés aux terminaux du dispositif ; et
un élément mobile disposé à l'intérieur du boîtier, l'élément étant mobile entre une première et une seconde position pour indiquer un état du bloc de piles ;
**caractérisé en ce que** le bloc de piles comprend en outre un ressort disposé entre le boîtier et l' élément mobile.
